# EUROPEAN PATENT APPLICATION

(11) **EP 4 411 965 A1**
(43) Date of publication of application: **07.08.2024**
(21) Application number: 22944462.5
(22) Date of filing: 12.07.2022
(51) Int. Cl.: H01M 50/471, H01M 50/483, H01M 10/48

(54) **SEPARATION PLATE ASSEMBLY, BATTERY AND ELECTRIC DEVICE**

(30) Priority: 02.06.2022 CN 202221386362 U
(71) Applicant: Contemporary Amperex Technology Co., Limited, Ningde, Fujian 352100 (CN)
(72) Inventor: CHEN, Guize, Ningde, Fujian 352100 (CN); YANG, Yuqing, Ningde, Fujian 352100 (CN); WEI, Chenying, Ningde, Fujian 352100 (CN); XUE, Danyue, Ningde, Fujian 352100 (CN); LI, Yan, Nignde, Fujian 352100 (CN)
(74) Representative: Jacob, Reuben Ellis
(86) International application number: PCT/CN2022/105280
(87) International publication number: WO 2023/231147

(57) **Abstract**

Provided in the present application are a separation plate assembly, a battery and an electric device. The separation plate assembly comprises a separation plate body, the separation plate body being provided with an accommodating seat; and a protection member, the protection member being arranged in the accommodating seat and defining an accommodating space with the accommodating seat. The accommodating seat is provided with a cut-off part, so that at least part of the accommodating space can be observed through the cut-off part. By providing the cut-off part, the inside condition of the accommodating space can be clearly and easily observed, so that parts mounted in the accommodating space can be inspected without turning over the separation plate assembly. The arrangement greatly reduces the testing cost, increases the testing efficiency, and also avoids the separation plate assembly being turned over frequently, thereby improving the reliability of the testing means. Moreover, the protection member can also protect the parts mounted in the accommodating space and increases the clearance so as to prevent the parts from being damaged by welding slag generated during welding, thus helping to increase the yield of batteries.

## Description

### CROSS-REFERENCE TO RELATED APPLICATIONS

This application refers to Chinese Patent Application No. 202221386362.5, filed on June 2, 2022 and entitled "SEPARATION PLATE ASSEMBLY, BATTERY AND ELECTRIC DEVICE", which is incorporated herein by reference in its entirety.

### TECHNICAL FIELD

This application relates to the field of battery technologies, and in particular, to a separator plate assembly, a battery, and an electric device.

### BACKGROUND

With the rapid development of new energy technologies, batteries are widely used in electronic devices, such as mobile phones, laptop computers, battery motorcycles, electric vehicles, electric airplanes, electric ships, electric toy cars, electric toy ships, electric toy airplanes, and electric tools.

During use of the battery, connecting pieces fixed to an isolation plate are always required to effectively connect a plurality of battery cells. However, in some cases, the assembly process of the isolation plate assembly is complicated, requiring multiple inspection procedures to ensure effective mounting and avoid battery scrap. Undoubtedly, this increases production costs and reduces production efficiency.

### SUMMARY

This application is intended to resolve at least one of the technical problems in the prior art. For this, an objective of this application is to provide an isolation plate assembly, so as to improve the efficiency of mounting the isolation plate assembly.

An embodiment of a first aspect of this application provides an isolation plate assembly applied to a battery, including an isolation plate body, where the isolation plate body is provided with an accommodating seat; and a protection member, where the protection member is disposed in the accommodating seat and defines an accommodating space together with the accommodating seat. The accommodating seat is provided with a removal portion, such that at least part of the accommodating space is observable via the removal portion.

In the technical solutions of the embodiments of this application, the provision of the removal portion makes the situation in the accommodating space observable clearly and easily, without the need to turn over the isolation plate assembly to inspect the components (for example, the thermal pad or a sensor) mounted in the accommodating space. Such arrangement significantly reduces the inspection costs, improves inspection efficiency, and avoids repeatedly turning over the isolation plate assembly, thereby enhancing the reliability of the inspection method. The protection member can further provide protection for the components (for example, the temperature sensor) mounted in the accommodating space, increasing the electrical clearance and preventing these components from being damaged by welding slags during welding, thereby helping to increase the yield of the batteries.

In some embodiments, the removal portion is disposed in at least one side wall of the accommodating seat. The removal portion being disposed in the at least one side wall of the accommodating seat allows for low costs of the solution and for effective observation on the thermal pad through simple means, making the solution suitable for large-scale promotion and application.

In some embodiments, the protection member is detachably connected to the cover plate of the accommodating seat. The protection member being detachably connected to the cover plate of the accommodating seat can improve the efficiency of assembling the protection member and the accommodating seat, and facilitate the mounting and maintenance of the components (for example, the temperature sensor and the thermal pad) in the accommodating space. In addition, the minimum post-sale unit for maintaining and replacing can be downgraded from the entire original isolation plate assembly to a protection member, improving production efficiency and reducing post-sale costs.

In an embodiment, the accommodating seat includes at least one fixed portion and the cover plate includes at least one clamping portion, the at least one clamping portion being detachably connected in the at least one fixed portion. The foregoing arrangement enables convenient detachable connection between the accommodating seat and the cover plate, improving the assembly efficiency and reducing the maintenance costs.

In some embodiments, the accommodating seat includes a first cover-plate fixed wall and a second cover-plate fixed wall that are opposite each other. The at least one fixed portion includes a first latch and a second latch that are respectively disposed in the first cover-plate fixed wall and the second cover-plate fixed wall. The at least one clamping portion includes a first elastic claw and a second elastic claw that are respectively disposed at two ends of the cover plate, and the first elastic claw and the second elastic claw are detachably connected to the first latch and a second latch, respectively. The fit between the elastic claw and the latch can realize reliable fixing of the cover plate while keeping the cover plate detachable.

In some embodiments, the accommodating seat includes a first cover-plate fixed wall and a second cover-plate fixed wall that are opposite each other. One end of the cover plate is hinged to one of the first cover-plate fixed wall and the second cover-plate fixed wall, the other end of the cover plate is provided with an elastic claw, and the elastic claw is detachably connected to a latch disposed in the other of the first cover-plate fixed wall and the second cover-plate fixed wall. The foregoing arrangement can realize the reliable fixing of the cover plate while keeping the cover plate detachable, and makes the cover plate less vulnerable to loss.

In some embodiments, a recessed portion is provided on a surface of the protection member adjacent to the accommodating space, and the recessed portion extends from the surface adjacent to the accommodating space in a direction away from the accommodating space. With the recessed portion provided on the surface of the protection member adjacent to the accommodating space, the components (for example, the temperature sensor) in the accommodating space can be positioned. For example, convex portions can be provided on the surfaces of these components adjacent to the recessed portion, such that the fit between the convex portion and the recessed portion can prevent the relative movement between the component and the protection member.

In some embodiments, a recessed opening is provided on a side surface of the protection member adjacent to the isolation plate body. The recessed opening being provided on the side surface of the protection member adjacent to the isolation plate body facilitates wiring of electrical connectors such as flexible circuit boards. That is, the recessed opening can provide positioning function (for example, preventing the flexing or bending of the flexible circuit boards or flexible flat cables) for the electrical connectors, and allows the electrical connectors to have some movement space in the recessed opening, so as to prevent the electrical connectors from being squeezed and worn by vibrations or impacts during use.

In some embodiments, the protection member includes a first protruding portion and a second protruding portion extending from the side surface of the protection member adjacent to the isolation plate body, and the recessed opening is disposed between the first protruding portion and the second protruding portion. Through such arrangement, the recessed opening can provide positioning function (for example, preventing the flexing or bending of the flexible circuit boards or flexible flat cables) for the electrical connectors, and allows the electrical connectors for some movement space in the recessed opening.

In some embodiments, a support portion is provided in the accommodating seat, and the support portion is disposed on the at least one side wall of the accommodating seat to abut against a surface of the protection member adjacent to the accommodating space. The support portion being provided in the accommodating seat prevents the protection member from applying an excessively large force to the components (for example, the temperature sensor) in the accommodating space, thereby avoiding damaging the components in the accommodating space.

In some embodiments, the accommodating seat and the isolation plate body are integrally formed. The foregoing arrangement allows the accommodating seat and the isolation plate body to be integrally formed, without the need to additionally produce and mount the accommodating seat, reducing the parts of the power connection assembly, thereby improving the production efficiency of the battery.

An embodiment of a second aspect of this application provides a battery, including the isolation plate assembly according to the embodiments of the first aspect. Such battery is convenient to assemble and easy to maintain and replace, with low post-sale costs.

An embodiment of a third aspect of this application provides an electric apparatus, including the battery according to the embodiment of the second aspect. The battery of such electric apparatus can be replaced and maintained with low costs.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.

In the accompanying drawings, unless otherwise specified, the same reference signs throughout a plurality of accompanying drawings indicate the same or similar components or elements. These accompanying drawings may not necessarily be drawn to scale. It should be understood that these accompanying drawings illustrate only some implementations disclosed according to this application and should not be construed as limitations on the scope of this application.
FIG. 1 is a schematic diagram of a battery according to some embodiments of this application;
FIG. 2 is a schematic diagram of an isolation plate assembly according to some embodiments of this application;
FIG. 3 is an enlarged view of part A circled in FIG. 2;
FIG. 4 is a schematic diagram of an isolation plate assembly before assembled according to some embodiments of this application;
FIG. 5 is an enlarged view of part B circled in FIG. 4;
FIG. 6 is a partial top view of an isolation plate assembly according to some embodiments of this application;
FIG. 7 is an enlarged view of part C circled in FIG. 6;
FIG. 8 is a cross-sectional view of the isolation plate assembly shown in FIG. 7 in a direction of dashed line D-D; and
FIG. 9 is a three-dimensional diagram of a cover plate according to some embodiments of this application.

Reference numerals in the accompanying drawings are described as follows:
1. battery;
2. isolation plate assembly;
20. isolation plate body; 200. accommodating seat; 210. accommodating space; 220. removal portion; 230. side wall; 240. first cover-plate fixed wall; 250. second cover-plate fixed wall; 241. first latch; 251. second latch; 260. support portion;
30. cover plate; 311. first elastic claw; 312. second elastic claw; 313. recessed portion; 314. recessed opening; 315. first protruding portion; 316. second protruding portion;
3. battery cell;
4. connecting piece;
5. temperature sensor; and 51. convex portion;
6. thermal pad; and
7. flexible circuit board.

### DETAILED DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "have", and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal" "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the means or components mentioned must have specific orientations, or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

In order to prevent safety incidents caused by battery overheating, a temperature sensor (for example, NTC temperature sensors) is always placed on the surface of a battery unit to monitor the battery temperature in real time. In some cases, it is necessary to use an adhesive to fix the temperature sensor onto a temperature sensor fixing bracket, and then the temperature sensor fixing bracket is assembled with and fixed to the isolation plate assembly. However, too many components increase the height of the battery, and the temperature sensor fixing bracket is pressed beneath a connecting piece, resulting in high maintenance costs and complicated mounting procedures.

To enhance the measurement accuracy of the temperature sensor, it is necessary to dispose a thermal pad between the temperature sensor and the battery unit. However, in some cases, it is impossible to directly observe the thermal pad, beneath the temperature sensor, in direct contact with the battery unit. To prevent batteries from being scrapped due to the absence of the thermal pad, it is necessary to turn over the isolation plate assembly by 180 degrees before the isolation plate assembly of the temperature sensor is fixed and the battery unit is assembled, to check whether the thermal pad is fixed below the temperature sensor properly. This no doubt further reduces assembly efficiency, causing numerous safety hazards due to the turn over of the isolation plate assembly.

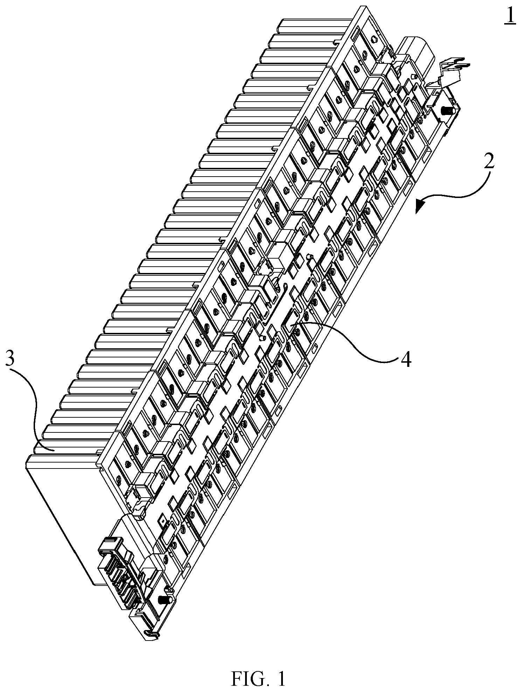

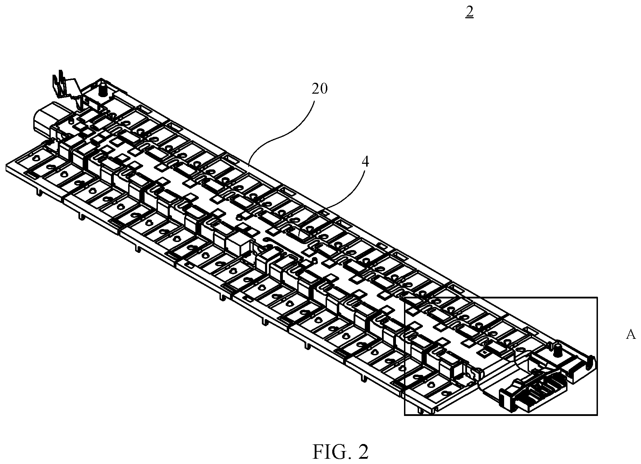

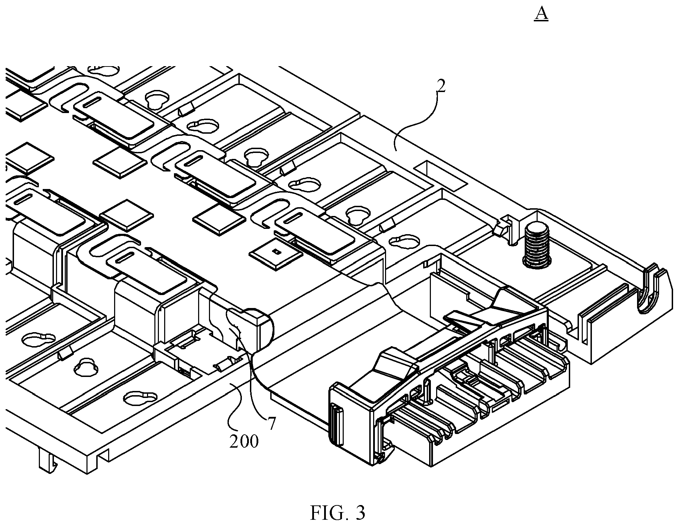

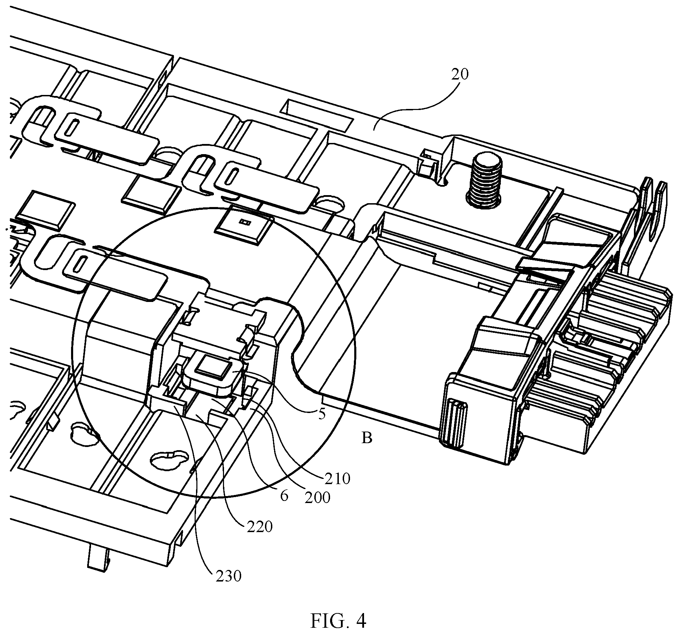

FIG. 1 is a schematic diagram of a battery 1 according to some embodiments of this application. FIG. 2 is a schematic diagram of an isolation plate assembly 2 according to some embodiments of this application. FIG. 3 is an enlarged view of part A circled in FIG. 2. FIG. 4 is a schematic diagram of an isolation plate assembly 2 before assembled according to some embodiments of this application.

FIGs. 1 to 4 show the isolation plate assembly 2 applied to the battery 1. The isolation plate assembly 2 includes an isolation plate body 20 and a protection member. The isolation plate body 20 is provided with an accommodating seat 200, and the protection member is disposed in the accommodating seat 200 and defines an accommodating space 210 together with the accommodating seat 200. The accommodating seat 200 is provided with a removal portion 220, such that at least part of the accommodating space 210 is observable via the removal portion 220.

In some implementations, as shown in FIGs. 1 and 2, the battery 1 includes a battery cell 3 and a connecting piece 4 mounted on the isolation plate body 20. The connecting piece 4 is configured to connect a plurality of battery cells 3 in series, in parallel, or in series-parallel, where being connected in series-parallel means a combination of series and parallel connections of the plurality of battery cells 3. The isolation plate body 20 is configured to insulate and isolate the battery cells 3 from other components in the battery 1, reducing the possibility of short circuits.

In some implementations, the accommodating seat 200 is a portion of the isolation plate body 20. In some implementations, the accommodating seat 200 is detachably mounted on the isolation plate body 20. As shown in FIG. 4, in some implementations, the accommodating seat 200 includes a bottom wall (not shown in the figure) and a side wall 230, where the bottom wall and the side wall 230 jointly define the accommodating space 210. It may be understood that the accommodating seat 200 and the accommodating space 210 may be in any shape, to accommodate any components in the battery 1. In some implementations, the accommodating space 210 and the components in the accommodating space 210 match in shape for fixing. In some implementations, the components in the accommodating space 210 are a temperature sensor 5 and a thermal pad 6. In some implementations, a first opening is provided on the bottom wall of the accommodating seat 200, and the thermal pad 6 penetrates through the first opening to be in thermal contact with the battery cell 3 under test. The temperature sensor 5 is mounted on the thermal pad 6, and the temperature sensor 5 is placed in the accommodating space 210. The temperature sensor 5 obtains temperature information about the battery cell 3 via the thermal pad 6 in direct contact with the battery cell 3. In some implementations, the temperature sensor 5 is an NTC sensor. In some implementations, the thermal pad 6 is made from an elastic highly-conductive material such as thermally conductive polymer. Under the pressure of the protection member, the thermal pad 6 is easily, elastically compressed, providing better thermal conductivity. In some implementations, the protection member refers to any element used for protecting the components in the accommodating space 210. In some implementations, the protection member is a cover plate, a protective shield, a protective film, and the like. In some implementations, the protection member is provided with a structure fitting with the component in the accommodating space 210, enabling the protection member to limit the position of the component of the accommodating space 210.

It can be understood that the removal portion 220 on the accommodating seat 200 may be in any shape, for example, being rectangular, circular, and elliptical.

The provision of the removal portion 220 makes conditions in the accommodating space 210 observed clearly and easily, without the need to turn over the isolation plate assembly 2, so as to inspect the components (for example, the thermal pad 6 and the temperature sensor 5) mounted in the accommodating space 210. Such arrangement significantly reduces the inspection costs, improves inspection efficiency, and avoids repeatedly turning over the isolation plate assembly 2, thereby enhancing the reliability of the inspection method. The protection member can further provide protection for the components (for example, the temperature sensor 5) mounted in the accommodating space, increasing the electrical clearance and preventing the temperature sensor 5 from being damaged by welding slags during the welding of the connecting piece 4, thereby helping to increase the yield of the batteries.

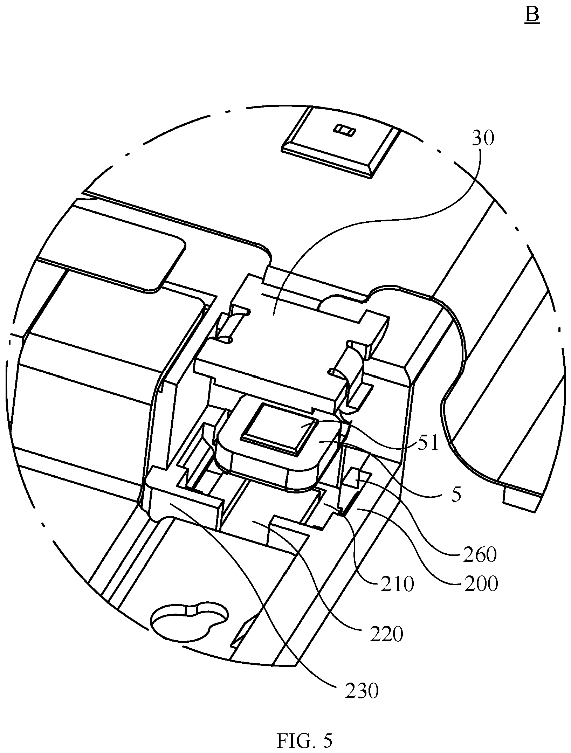

According to some embodiments of this application, as shown in FIG. 5, the removal portion 220 is disposed in at least one side wall 230 of the accommodating seat 200.

It can be understood that in any implementation, there may be one or more removal portions 220, and the removal portion 220 may be disposed on any side wall 230 of the accommodating seat 200. In some implementations, the removal portion 220 is disposed on the side wall 230 of the accommodating seat 200 close to an edge of the isolation plate body 20, allowing the inspecting personnel to observe the accommodating space 210 in the accommodating seat 200. In some implementations, the removal portion 220 is disposed in a position where the side wall 230 is adjacent to the thermal pad 6.

The removal portion 220 being disposed in the at least one side wall 230 of the accommodating seat 200 allows for low costs of the solution and for effective observation on the thermal pad 6 through simple means, making the solution suitable for large-scale promotion and application.

According to some embodiments of this application, as shown in FIG. 5, the protection member is detachably connected to the cover plate 30 of the accommodating seat 200.

In some implementations, the cover plate 30 is made of an elastic material such as plastic. The cover plate 30 being elastic facilitates the detachable connection between the cover plate 30 and the accommodating seat 200.

The protection member being detachably connected to the cover plate 30 of the accommodating seat 200 can improve the efficiency of mounting the protection member and the accommodating seat 200, facilitating the mounting and maintenance of the temperature sensor 5 and the thermal pad 6 in the accommodating space 210. In addition, the minimum post-sale unit for maintaining and replacing can be downgraded from the entire original isolation plate assembly 2 to a protection member, improving production efficiency and reducing post-sale costs.

According to some implementations of this application, the accommodating seat 200 includes at least one fixed portion and the cover plate 30 includes at least one clamping portion, the at least one clamping portion being detachably connected to the at least one fixed portion.

The clamping portion refers to a component of the cover plate 30 configured for interconnection with the accommodating seat 200, such as a claw or a buckle.

The fixed portion refers to a component of the accommodating seat 200 configured for interconnection with the cover plate 30, such as a latch or slot.

The foregoing deposition enables convenient detachable connection between the accommodating seat 200 and the cover plate 30, improving the assembly efficiency and reducing the maintenance costs.

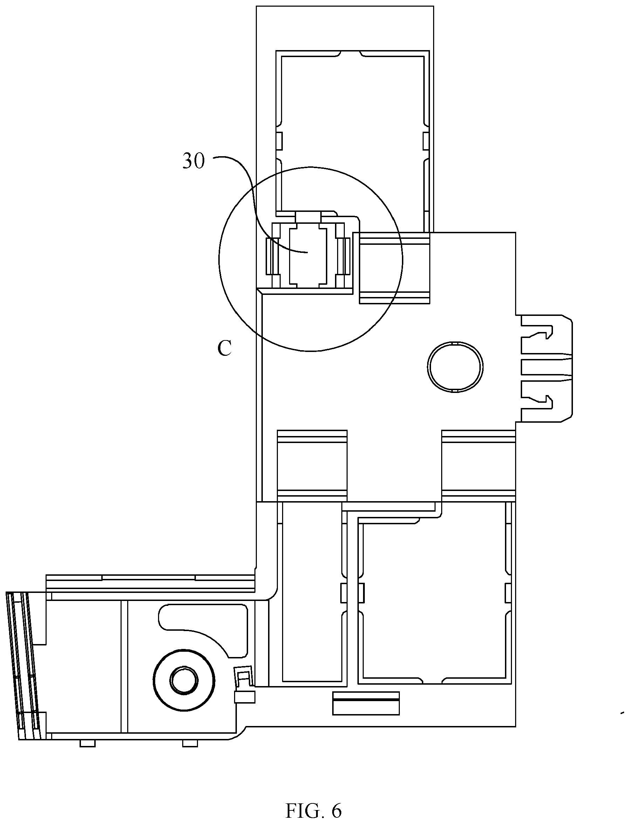

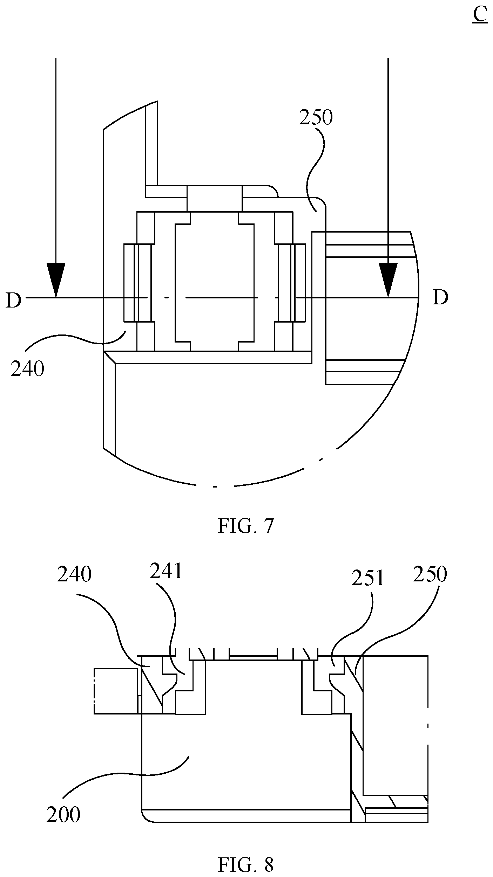

In some implementations, as shown in FIGs. 6 to 9, the accommodating seat 200 includes a first cover-plate fixed wall 240 and a second cover-plate fixed wall 250 that are opposite each other. The at least one fixed portion includes a first latch 241 and a second latch 251 that are respectively disposed in the first cover-plate fixed wall 240 and the second cover-plate fixed wall 250. The at least one clamping portion includes a first elastic claw 311 and a second elastic claw 312 that are respectively disposed at two ends of the cover plate, and the first elastic claw 311 and the second elastic claw 312 are detachably connected to the first latch 241 and a second latch 251, respectively.

It can be understood that the latch and the claw can be in any shape, provided that the two are engaged to each other. The elastic claw is made of an elastic material such as a thermoplastic elastomer.

The fit between the elastic claw and the latch allows for the reliable fixing of the cover plate 30 while keeping the cover plate 30 detachable. The elastic claw can drive the cover plate 30 to automatically rebound, and the force of the cover plate 30 on the temperature sensor 5 further enhances the fixing, such that the temperature sensor 5 does not need to be fixed additionally using an adhesive, thereby saving the production procedure.

In some implementations, the accommodating seat 200 includes a first cover-plate fixed wall 240 and a second cover-plate fixed wall 250 that are opposite each other. One end of the cover plate 30 is connected to, via a hinge (not shown in the figure), one of the first cover-plate fixed wall 240 and the second cover-plate fixed wall 250, and the other end of the cover plate 30 is provided with an elastic claw, and the elastic claw is detachably connected to a latch disposed in the other of the first cover-plate fixed wall 240 and the second cover-plate fixed wall 250.

It can be understood that the latch and the claw can be in any shape, provided that the two are engaged to each other. The elastic claw is made of an elastic material such as a thermoplastic elastomer.

The foregoing arrangement can realize the reliable fixing of the cover plate 30 while keeping the cover plate 30 detachable, making it less likely for the cover plate 30 to go missing.

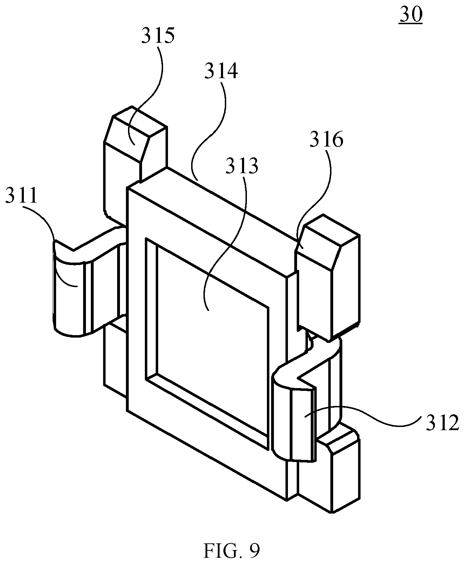

In some implementations, as shown in FIGs. 5 and 9, a recessed portion 313 is provided on a surface of the protection member adjacent to the accommodating space 210, and the recessed portion 313 extends from the surface adjacent to the accommodating space 210 in a direction away from the accommodating space 210.

In some implementations, as shown in FIGs. 5 and 9, the recessed portion 313 on the surface of the protection member adjacent to the accommodating space 210 fits with a convex portion 51 on the surface of the temperature sensor 5 being in contact with the protection member, limiting and fixing the temperature sensor 5. This can reduce the fixing components, reduce the manufacturing costs, and improve the assembly efficiency. In addition, the convex portion 51 on the surface of the temperature sensor 5 being in contact with the protection member facilitates the automatic mounting of the protection member, and the technical personnel can implement automated addressing production based on the card structure.

In some implementations, a protruding portion is provided on the surface of the protection member adjacent to the accommodating space 210. The protruding portion on the surface of the protection member adjacent to the accommodating space 210 fits with the accommodating portion on the surface of the temperature sensor being in contact with the protection member.

With the recessed portion 313 provided on the surface of the protection member adjacent to the accommodating space 210, the components such as the temperature sensor 5 in the accommodating space 210 can be positioned. The surface of the temperature sensor 5 adjacent to the recessed portion 313 may be provided with a convex portion 51, and the fit between the convex portion 51 and the recessed portion 313 can prevent the relative movement between the temperature sensor 5 and the protection member.

In some implementations, as shown in FIGs. 4 and 9, a recessed opening 314 is provided on the side surface of the protection member adjacent to the isolation plate body 20.

The assembly of the battery requires electrical fit between a plurality of components. In some implementations, as shown in FIGs. 3, 4, and 9, the isolation plate assembly 2 further needs to be assembled with a flexible circuit board 7 or a flexible flat cable, and the flexible circuit board 7 or the flexible flat cable needs to be electrically connected to the temperature sensor 5, so as to obtain the sampling temperature at any time. The flexible circuit board 7 or the flexible flat cable is disposed between the temperature sensor 5 and the thermal pad 6 via the recessed opening 314, and the isolation plate assembly 2 also prevents the flexing or bending of the flexible circuit board 7 or flexible flat cable.

The recessed opening 314 being provided on side surface of the protection member adjacent to the isolation plate body 20 facilitates wiring of electrical connectors (for example, the flexible circuit board 7 or the flexible flat cable). That is, the recessed opening 314 can provide positioning function for the electrical connectors, and allows the electrical connectors to have some movement space in the recessed opening 314, to prevent the electrical connectors from being squeezed and worn by vibrations or impacts during use.

In some implementations, as shown in FIGs. 4 and 9, the protection member includes a first protruding portion 315 and a second protruding portion 316 extending from the side surface of the protection member adjacent to the isolation plate body 20, and the recessed opening 314 is disposed between the first protruding portion 315 and the second protruding portion 316.

It may be understood that the first protruding portion 315 and the second protruding portion 316 may be in any shape.

Through such arrangement, the recessed opening 314 can provide positioning function (for example, preventing the flexing or bending of the flexible circuit board 7 or flexible flat cable) for the electrical connectors, and allows the electrical connectors for some movement space in the recessed opening 314.

In some implementations, as shown in FIG. 5, a support portion 260 is provided in the accommodating seat 200, and the support portion 260 is disposed on the at least one side wall 230 of the accommodating seat 200 to abut against a surface of the protection member adj acent to the accommodating space 210.

It can be understood that any quantity of support portions 260 can be provided based on the actual production requirement, and the position of the support portion 260 in the accommodating seat 200 can be adjusted arbitrarily.

As the support portion 260 abutting against the surface of the protection member adjacent to the accommodating space 210 is disposed in the accommodating seat 200, the protection member can be prevented from applying an excessively large force to the components (for example, the temperature sensor 5 and the thermal pad 6) in the accommodating space 210, thereby avoiding damaging the components in the accommodating space 210.

In some implementations, the accommodating seat 200 and the isolation plate body 20 are integrally formed.

Bing integrally formed means that the accommodating seat 200 and the isolation plate body 20 are integrally designed and manufactured. In some implementations, the accommodating seat 200 and the isolation plate body 20 are integrally formed through plastic injection, extrusion, or the like.

The foregoing arrangement allows the accommodating seat 200 and the isolation plate body 20 to be integrally formed, without the need to additionally produce and mount the accommodating seat 200, reducing the parts of the battery and reducing the height of the isolation plate assembly 2, thereby improving the production efficiency of the battery and helping to reduce the weight of the battery.

This application provides an isolation plate assembly 2 of the battery 1, including the isolation plate body 20 and the cover plate 30. The isolation plate body 20 is provided with an accommodating seat 200 formed integrally, the cover plate 30 is disposed in the accommodating seat 200 and defines an accommodating space 210 together with the accommodating seat 200, and the accommodating space 210 is used to accommodate the temperature sensor 5 and the thermal pad 6. The temperature sensor 5 is an NTC sensor, and the thermal pad 6 is an elastic thermal pad. The accommodating seat 200 includes a bottom wall (not shown in the figure) and a side wall 230. A first opening is provided on the bottom wall, and the thermal pad 6 penetrates through the first opening to be in thermal contact with the battery cell 3 under test. The side wall 230 is provided with a removal portion 220 in a position adjacent to the thermal pad 6, such that at least part of the thermal pad 6 in the accommodating space 210 is observable via the removal portion 220. The accommodating seat 200 further includes a first cover-plate fixed wall 240 and a second cover-plate fixed wall 250 that are opposite each other, and a first latch 241 and a second latch 251 that are respectively disposed in the first cover-plate fixed wall 240 and the second cover-plate fixed wall 250. The cover plate 30 includes a first elastic claw 311 and a second elastic claw 312 that are respectively disposed at two ends of the cover plate 30, and the first elastic claw 311 and the second elastic claw 312 are detachably connected to the first latch 241 and a second latch 251, respectively. A recessed portion 313 is provided on the surface of the cover plate 30 adjacent to the accommodating space 210, and a contact surface between the temperature sensor 5 in the accommodating space 210 and the cover plate 30 is provided with a convex portion 51. The recessed portion 313 of the cover plate 30 can accommodate the convex portion 51 of the temperature sensor 5, such the fit in shape between the convex portion 51 and the recessed portion 313 prevents the temperature sensor 5 from moving on a plane perpendicular to the side wall 230 with respect to the cover plate 30. The cover plate 30 further includes a first protruding portion 315 and a second protruding portion 316 extending from the side surface of the cover plate 30 adjacent to the isolation plate body 20, and the recessed opening 314 is disposed between the first protruding portion 315 and the second protruding portion 316 and penetrates through the protection member. The flexible circuit board 7 electrically connected to the temperature sensor 5 extends through the recessed opening 314 to be connected between the temperature sensor 5 and the thermal pad 6. The surface of the cover plate 30 adjacent to the accommodating space 210 abuts against the support portion 260 in the accommodating seat 200.

As shown in FIG. 1, this application provides a battery 1 including the isolation plate assembly 2 in any implementations.

The battery 1 is convenient to assemble and easy to maintain and replace, with low post-sale costs.

This application provides an electric apparatus, including the battery 1 in any implementation.

The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

The battery of such electric apparatus can be replaced and maintained with low costs.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. An isolation plate assembly (2) applied to a battery (1), comprising:
an isolation plate body (20), wherein the isolation plate body (20) is provided with an accommodating seat (200); and
a protection member, wherein the protection member is disposed in the accommodating seat (200) and defines an accommodating space (210) together with the accommodating seat (200);
wherein the accommodating seat (200) is provided with a removal portion (220), such that at least part of the accommodating space (210) is observable via the removal portion (220).

2. The isolation plate assembly (2) according to claim 1, wherein the removal portion (220) is disposed in at least one side wall (230) of the accommodating seat (200).

3. The isolation plate assembly (2) according to claim 2, wherein the protection member is a cover plate (30) detachably connected to the accommodating seat (200).

4. The isolation plate assembly (2) according to claim 3, wherein the accommodating seat (200) comprises at least one fixed portion, the cover plate (30) comprises at least one clamping portion, and the at least one clamping portion is detachably connected to the at least one fixed portion.

5. The isolation plate assembly (2) according to claim 4, wherein the accommodating seat (200) comprises a first cover-plate fixed wall (240) and a second cover-plate fixed wall (250) that are opposite each other, and the at least one fixed portion comprises a first latch (241) and a second latch (251) that are respectively disposed in the first cover-plate fixed wall (240) and the second cover-plate fixed wall (250); and
the at least one clamping portion comprises a first elastic claw (311) and a second elastic claw (312) that are respectively disposed at two ends of the cover plate (30), and the first elastic claw (311) and the second elastic claw (312) are detachably connected to the first latch (241) and the second latch (251), respectively.

6. The isolation plate assembly (2) according to claim 4, wherein the accommodating seat (200) comprises a first cover-plate fixed wall (240) and a second cover-plate fixed wall (250) that are opposite each other,
wherein one end of the cover plate (30) is hinged to one of the first cover-plate fixed wall (240) and the second cover-plate fixed wall (250), the other end of the cover plate (30) is provided with an elastic claw, and the elastic claw is detachably connected to a latch disposed in the other of the first cover-plate fixed wall (240) and the second cover-plate fixed wall (250).

7. The isolation plate assembly (2) according to any one of claims 1 to 6, wherein a recessed portion (313) is provided on a surface of the protection member adjacent to the accommodating space (210), and the recessed portion (313) extends from the surface adjacent to the accommodating space (210) in a direction away from the accommodating space (210).

8. The isolation plate assembly (2) according to any one of claims 1 to 7, wherein a recessed opening (314) is provided on a side surface of the protection member adjacent to the isolation plate body (20).

9. The isolation plate assembly (2) according to claim 8, wherein the protection member comprises a first protruding portion (315) and a second protruding portion (316) extending from the side surface of the protection member adjacent to the isolation plate body (20), and the recessed opening (314) is disposed between the first protruding portion (315) and the second protruding portion (316).

10. The isolation plate assembly (2) according to any one of claims 2 to 9, wherein a support portion (260) is provided in the accommodating seat (200), and the support portion (260) is disposed on the at least one side wall (230) of the accommodating seat (200) to abut against a surface of the protection member adj acent to the accommodating space (210).

11. The isolation plate assembly (2) according to any one of claims 1 to 10, wherein the accommodating seat (200) and the isolation plate body (20) are integrally formed.

12. A battery (1), comprising the isolation plate assembly (2) according to any one of claims 1 to 11.

13. An electric apparatus, wherein the electric apparatus comprises the battery (1) according to claim 12.
